# EUROPÄISCHE PATENTSCHRIFT

(11) **EP 0 891 482 B1**
(45) Veröffentlichungstag und Bekanntmachung des Hinweises auf die Patenterteilung: **09.07.2003**
(21) Anmeldenummer: 97918101.3
(22) Anmeldetag: 02.04.1997
(51) Int. Cl.: F02C 3/05, F01D 9/04, F24F 5/00

(54) **GASTURBINENEINHEIT**
GAS-TURBINE UNIT
UNITE DE TURBINE A GAZ

(30) Priorität: 04.04.1996 DE 19613781; 31.07.1996 DE 19630792
(43) Veröffentlichungstag der Anmeldung: 20.01.1999
(60) Teilanmeldung: 03003857.4
(73) Patentinhaber: Jung, Nadine, 8303 Bassersdorf (CH)
(72) Erfinder: Jung, Nadine, 8303 Bassersdorf (CH)
(74) Vertreter: Stoffregen, Hans-Herbert, Dr. Dipl.-Phys.
(86) Internationale Anmeldenummer: EP9701659
(87) Internationale Veröffentlichungsnummer: WO97038218

(56) Entgegenhaltungen:
- EP-A- 0 151 436
- EP-A- 0 554 544
- EP-A- 0 691 512
- EP-A- 0 738 655
- WO-A-89/11588
- DE-A- 3 302 318
- DE-B- 1 079 389
- DE-C- 718 650
- FR-A- 1 304 701
- GB-A- 774 415
- GB-A- 838 332
- GB-A- 2 237 372
- US-A- 2 409 159
- US-A- 3 266 250
- US-A- 3 739 572
- US-A- 3 955 360
- US-A- 3 994 630
- US-A- 4 312 191
- US-A- 5 101 620
- US-A- 5 105 616
- US-A- 5 174 108

## Beschreibung

Die Erfindung bezieht sich auf eine Gasturbineneinheit nach dem Oberbegriff des Anspruchs 1.

Gasturbinen werden häufig zum Antrieb von elektrischen Generatoren benutzt, wenn der Bauaufwand gering gehalten werden soll oder Mangel an Kühlwasser herrscht.

Aus der GB-A-838 332 ist eine Gasturbineneinheit mit einer über zwei Lager gestützte Welle und mit einem Verdichter bekannt, bei welcher der Rotor des Verdichters und ein Turbinenlaufrad nebeneinander auf derselben Welle angeordnet sind. Außerdem ist eine zweite Turbine auf einer zweiten Welle gelagert.

Aus der US-A-4,312,191 ist eine Anordnung zur Konditionierung von Luft bekannt, die einen Wärmetauscher sowie einen Elektromotor umfasst. Die Anordnung zeigt jedoch keinen Generator.

Der Erfindung liegt u. a, das Problem zugrunde, eine kornpakte, einwellige Gasturbine zu entwickeln, die modulartig, schnell und einfach an unterschiedliche Arbeitsmaschinen angekuppelt werden kann. Auch sollen Anordnungen zur Luftkonditionierung einfachen und kostengünstigen Aufbaus zur Verfügung gestellt werden.

Das Problem wird bei einer Gasturbine der eingangs beschriebenen Art erfindungsgemäß durch die kennzeichnenden Merkmale des Anspruchs 1 gelöst.

Bei der erfindungsgemäßen Gasturbine können der Verdichterrotor und der Turbinenrotor in kurzem Abstand voneinander angeordnet sein, da die Platte/Leitschaufelring eine kompakte Bauweise begünstigt. Hierdurch läßt sich eine erhebliche Reduzierung des Turbinengewichts erreichen. Insbesondere sind der Turbinenrotor und der Verdichterrotor einstückig ausgebildet. Der Herstellungsaufwand läßt sich hierdurch wesentlich vermindern.

Vorzugsweise sind in den Turbinenleitschaufeln Öffnungen für das Austreten von Kühlluft vorgesehen. Diese Öffnungen werden zweckmäßigenveise an den thermisch besonders belasteten Stellen der Turbinenleitschaufeln angeordnet. Hierdurch kann eine Filmkühlung und/oder Schwitzkühlung der Statorblätter erreicht werden.

Besonders zweckmäßig ist es, wenn die Platte zwischen Diffusorleitschaufeln und Turbinenleitschaufeln einstückig mit den Diffusor- und Turbinenleitschaufeln ausgebildet ist. Bei dieser Anordnung werden die Turbinenleitschaufeln wirksam vor Überhitzung geschützt. Zugleich wird der verdichteten Luft Wärme zugeführt, wodurch auf einfache Weise der Wirkungsgrad der Gasturbine erhöht wird. Die Platte mit den Diffusor- und Turbinenleitschaufeln besteht vorzugsweise aus einem keramischen Werkstoff.

Bei einer weiteren zweckmäßigen Ausführungsform ist der Turbinenrotor von einem doppelwandigen Gehäuse umgeben, in dessen Zwischenräume Kühlgas aus den Turbinenleit-schaufeln geleitet wird. Das doppelwandige Gehäuse verhindert den Wärmeübergang unmittelbar von der Brennkammer auf die Nozzle bzw. das Turbinenrad und wirkt als Hitzeschild.

Vorzugsweise sind in der äußeren Wand des doppelwandigen Gehäuses düsenförmige Luftaustrittsöffnungen vorgesehen. Das Kühlgas tritt aus den Öffnungen aus, wodurch eine Kühlung der äußeren Gehäusewand erreicht wird. Insbesondere sind radial über den radial in der Gehäusewand angeordneten Luftaustrittsöffnungen Strömungsumlenkplatten angeordnet, die die austretenden Gase axial in die Brennkammer umlenken. Hierdurch wird eine besonders gute Kühlung des Turbinenrotorgehäuses erreicht, da die aus dem Gehäuse austretende Strömung wie eine Art Kühlfilm wirkt. Der Kühlluftstrom wird voll der Brennkammer zugeführt und erwärmt sich kontinuierlich auf dem Weg bis zur Brennkammer, was wiederum eine Gesamtwirkungsgradverbesserung zur Folge hat.

Zweckmäßigerweise sind die axialen Öffnungen in den Turbinenleitschaufeln und axialen Kanälen für Kühlluft in der Platte und axiale Öffnungen den Diffusorleitschaufeln auf dem gleichen Teilkreis angeordnet. Das Verdichtergehäuse, die Platte mit den Diffusorschaufeln, die Turbinenleitschaufeln und das doppelwandige Gehäuse sind vorzugsweise miteinander verspannt, wodurch eine einfache und schnelle Montage möglich ist.

Vorteilhaft ist es auch, wenn der einstückige Rotor mit den Verdichter- und Turbinenlaufschaufeln fliegend gelagert ist, wobei die Lagerung auf der Verdichterseite vorgesehen ist. Die Lagerung befindet sich hierbei außerhalb der Zonen mit hohen Temperaturen, d.h. auf der Abtriebsseite. Dies bedeutet, daß die Lager einfacher ausgebildet sein können, da beispielsweise keine aufwendige Kühlung notwendig ist.

Weiterhin ist es günstig, zwischen der Platte und dem zwischen den Verdichterlaufschaufeln und den Turbinenlaufschaufeln liegenden Rand des einstückigen Rotors eine Labyrinthdichtung vorzusehen. Es treten daher nur geringe Frischgasverluste auf. Diese geringen Frischgasverluste beaufschlagen allerdings die Spitzen der Turbinenlaufschaufeln und bewirken eine gute Kühlung.

Bei einer weiteren zweckmäßigen Ausführungsform sind im einstückigen Rotor Kühlkanäle zwischen der Verdichterseite und den Turbinenlaufschaufeln vorgesehen. Insbesondere weisen die Kanäle in den Turbinenlaufschaufeln Öffnungen auf, die zum doppelwandigen Gehäuse hin ausgerichtet sind. Durch die Kühlung der Turbinenlaufschaufeln wird eine unerwünscht hohe thermische Belastung der Schaufeln vermieden. Die Öffnungen in den Turbinenlaufschaufeln können so angeordnet sein, daß auf der Schaufeloberfläche eine Film- und/oder Schwitzkühlung stattfindet.

Bei einer besonders zweckmäßigen Ausführungsform ist an einem Rand des die Gasturbine umgebenden Gehäuses ein Wulst für die Befestigung an einer stirnseitigen Platte, die die Platte mit den Diffusor- und Turbinenleitschaufeln und das doppelwandige Gehäuse trägt, mittels eines V-Profil-Spannbandes vorgesehen. Derartige Spannbänder sind kommerziell, z.B. von der Fa. Smith & Johnson (Keighley) Ltd., verfügbar. Das Turbinengehäuse kann bei dieser Ausführungsform in sehr kurzer Zeit entfernt werden, wodurch die Sicht auf die innen angeordneten Turbinenteile freigegeben wird. Hierdurch wird die Wartung und Inspektion erleichtert.

Vorzugsweise ist die Welle mit einem Untersetzungsgetriebe verbunden. Als Untersetzungsgetriebe ist insbesondere ein Planetengetriebe vorgesehen, dessen Sonnenrad mit dem Rotor der Turbine auf einer gemeinsamen Welle angeordnet ist. Mit dieser Ausgestaltung lassen sich Lager einsparen, d.h. der Rotor und das Getriebe kommen mit jeweils zwei Lagerstellen aus.

Axialkräfte, die von dem Turbinenrotor ausgehen, werden vorzugsweise durch Schrägverzahnung der Getrieberäder kompensiert, bzw. auf das Lager des Glockenrades übertragen.

Bei einer besonders vorteilhaften Ausführungsform sind auf der Abtriebswelle das Pumpenrad einer Ölpumpe, das Pumpenrad einer Kraftstofförderpumpe sowie ein Rotor eines Startermotors angeordnet. Durch diese Ausbildung der Gasturbine und ihre Verbindung mit den Hilfsaggregaten wird eine erhebliche Volumen- und Gewichtseinsparung erzielt, wodurch auch die Herstellungskosten erheblich reduziert werden. Es ist auch günstig, auf der Abtriebswelle ein Lüfterrad eines Kühlgebläses anzubringen. Der Startermotor kann ein Gleich- oder Drehstrommotor sein. Das Kühlgebläse kann die elektrischen Teile der Gasturbine und das Getriebegehäuse durch eine entsprechende Luftführung, z.B. über Kühlrippen, kühlen oder einen Kühler durchströmen. Ein zusätzlicher Ölkühler ist deshalb nicht erforderlich. Ebenfalls einsparen lassen sich schwere Gehäuse für eine Kraftstoffpumpe, für eine Ölpumpe, für einen Anlasser, einen Generator und ein Kühlgebläse. Für all diese Baugruppen sind nur zwei Lager, nämlich diejenigen der Abtriebswelle erforderlich.

Durch die erfindungsgemäße Konstruktion ist es möglich, ein Antriebsaggregat zur Verfügung zu stellen, welches z.B. bei einer Leistung von 150 KW nur ein Gewicht von ca. 20 kg aufweist und mit geringerer Kraftstoffmenge auskommt und somit einen höheren Wirkungsgrad aufweist. Die Wartungs- und Inspektionsintervalle werden reduziert und die Zuverlässigkeit gesteigert.

Das erfindungsgemäße Turbinenpaket/Modul, zu dem das Untersetzungsgetriebe und die Hilfsaggregate gehören, ist so handlich und leicht, daß auf eine Verbindung mittels z.B. Stehbolzen zwischen Turbine und den wahlweise nachgeschalteten diversen austauschbaren anzutreibenden Aggregaten verzichtet werden kann. Erfindungsgemäß ist der Getriebehals im Umfang mit einem Bund versehen, welcher dazu dient, mittels Quick-Disconnect-Kupplung, vorzugsweise V-Schelle, in wenigen Sekunden das Turbinenpaket/Modul mit diversen Aggregaten wie Pumpen, Generatoren, Fahrzeugen, Hubschraubern, Motorbooten, Baumaschinen zu verbinden oder zu trennen. Dies ist von besonderer Bedeutung, weil nunmehr ein System zur Verfügung steht, welches zum vielseitigen Einsatz (Polizei, Katastrophenschutz, Feuerwehr, Flughäfen, Automobilhersteller, Flugzeuge- und Hubschrauberhersteller, Klimaaggregatehersteller, etc.) geeignet ist.

Das gleiche Aggregat kann z.B. erst als Antriebsaggregat in einem Fahrzeug (Jeep) und danach z.B. als Antrieb für eine Feuerlöschpumpe etc. genutzt werden.

Um elektrische Energie z.B. für die Flugzeugbordstromversorgung von 400 Hz zu erzeugen, wird die Einheit mit der Gasturbine mittels des V-Profil-Spannbandes am Generatorgehäuse befestigt.

Die oben beschriebene erfindungsgemäße Einheit kann mit einem Elektromotor, Elektrogenerator oder mit einer Motor-Generator-Einheit (Dieselmotor/Elektromotor oder auch Ottomotor) gekoppelt werden.

Eine mit einem Motor/Generator gekoppelte, erfindungsgemäße Einheit ist insbesondere noch mit folgenden Einrichtungen versehen:

Integrierte Kühlung, integrierte Spannungsregelung, integrierter Überlastschutz, integrierte Lastschaltkontakte wie z.B. 3-Phasenrelais, integrierte Instrumentierung, welche wahlweise abgenommen werden kann und mittels Verbindungskabel auch als Fernbedienung eingesetzt wird, integrierte Unter-/Überspannung, integrierte Unter-/Überfrequenz. Die Stromversorgungseinheiten sind mit Griffen für einfachen An- und Abbau ausgestattet. Hilfsmittel wie Kran, Stapler, etc. entfallen. Das Gewicht eines 90 KVA, 400 Hz Energiepaketes für Flugzeuge etc. beträgt nur ca. 55 kg.

Eine Gasturbineneinheit der oben beschriebenen Art wird vorteilhafterweise auch an ein Verteilergetriebe mit wenigstens zwei Abtriebswellen mittels Quick-Disconnect-Flanschverbindungen angekoppelt.

Verwendet werden kann die erfindungsgemäße Gasturbineneinheit in Verbindung mit hydraulischen Systemen und Stromversorgungsgeräten für Hubschrauber.

Die erfindungsgemäße Gasturbineneinheit läßt sich auch vorteilhaft mit einem Turbokompressor verbinden, mit dem Startluft für Flugzeuge erzeugt werden soll. Auch zum Antrieb von Hochdruckkompressoren eignet sich die erfindungsgemäße Gasturbineneinheit, um pneumatische Werkzeuge anzutreiben, Fahrwerkzylinder mit Druckluft aufzufüllen und Druckspeicher und Preßluftflaschen zu füllen.

Besonders gut ist die erfindungsgemäße Gasturbineneinheit zum Antrieb von Pumpen, z.B. für die Feuerwehr oder zur Trinkwasserversorgung, geeignet.

Die erfindungsgemäße Gasturbineneinheit kann auch sowohl einen Turbokompressor für die Erzeugung konditionierter Luft als auch einen elektrischen Generator antreiben.

Die erfindungsgemäße Gasturbineneinheit eignet sich auch besonders zum Antrieb von Wasserstrahlpumpen für Bootsantriebe und von Pumpen zum Ansaugen von Ölteppichen bei Tankerunfällen.

Ausgenutzt wird auch die Wärme im Abgasstrom, in dem die Abgase wenigstens teilweise über einen Wärmeaustauscher geleitet werden, so daß die Gasturbineneinheit sowohl zur Erzeugung mechanischer Energie als auch zur Warmwasserversorgung eingesetzt werden kann.

Die Gasturbineneinheit kann auch zum Antrieb elektrischer Generatoren für die Energieerzeugung mit 50/60 Hz verwendet werden.

Aufgrund ihres kompakten Aufbaus und geringen Gewichts ist die erfindungsgemäße Gasturbineneinheit auch gut als Antrieb für einen Flugzeugpropeller geeignet. Die Gasturbineneinheit wird hierbei mit einem Untersetzungsgetriebe und einem Propeller, z.B. einer Mantelschraube, ausgerüstet.

Das komplette Aggregat besteht aus Gasturbineneinheit mit Hilfsaggregaten, Untersetzungsgetriebe und Propeller. Dieses komplette Aggregat wird insbesondere mit der Zelle eines Luftfahrzeugs verbunden. Als Vebindungselement ist die oben beschriebene Quick-Disconnect-Verbindung (V-Profil-Spannelement) vorgesehen. Aufgrund einer solchen Verbindung kann ein Triebwerkwechsel schnell ausgeführt werden. In entsprechender Weise wird ein komplettes Aggregat aus Gasturbineneinheit mit Hilfsaggregaten und Untersetzungsgetriebe für den Einbau in einen Hubschrauber ausgebildet.

Ein Aggregat aus Gasturbineneinheit mit Hilfsaggregaten wird vorzugsweise mit einem stufenlosen Getriebe, z.B. nach dem PIV- oder van Dornen - Prinzip, bei Landfahrzeugen eingesetzt. Das Aggregat wird insbesondere bei Lastfahrzeugen verwendet aber auch dort wo große bzw. wechselnde Drehmomente häufig vorkommen wie bei Traktoren. Baumaschinen, Flugzeugschleppern.

Bei einer weiteren zweckmäßigen Ausführungsform ist eine Gasturbineneinheit auf der dem Turbinenrotor abgewandten Seite mit axialen oder einem radialen Turbinenrad einer Turbine verbunden, die über einen Wärmetauscher und ein Regulierglied an den Verdichter der Gasturbine angeschlossen ist. Diese Ausführungsform liefert stufenlos und pulsationsfrei öl- und keimfreie, heiße oder kalte Luft. Wenn zusätzlich der elektrische Generator von der Welle der Turbineneinheit angetrieben wird, liefert die Einheit auch Strom. Die Einheit kommt mit zwei Lagerstellen aus. Die vom Verdichter abgezweigte Luft wird im Wärmetauscher erhitzt oder abgekühlt und durch entsprechende Regelungsmaßnahmen in konditionierte Luft umgewandelt. Als Brennstoff können Diesel-Öl, Benzin, Naturgas, Biogas, Alkohol oder Wasserstoff bzw. Gemische aus derartigen Stoffen verwendet werden.

Bei einer zusätzlichen zweckmäßigen Ausführungsform ist die Gasturbineneinheit mit einer weiteren auf der Welle angeordneten Turbine versehen, der verdichtete Luft aus der Atmosphäre zugeführt wird. Anstelle der Zapfluft aus dem Verdichter der Gasturbine erzeugt hier die Verdichterstufe der weiteren Turbine einen Luftstrom, der in der Turbine Arbeit leistet und dabei entspannt wird. Die Ausführungsform hat den Vorteil, daß ohne Leistungsverluste auf der Antriebsseite/Turbine der anzusaugenden Luft ein Filter vorgeschaltet werden kann und die Luft auch nicht mit dem Verbrennungsgas der Antriebsturbine in Berührung kommt. Die beiden einzigen Lagerstellen dieses Aggregates können mit Fettkammern versehen sein oder eine Ölschmierung erhalten, da zum einen die Lagerstellen durch die Ansaugluft oder auch durch gezielt eingesetzte konditionierte Luft gekühlt werden können und zum anderen keine Wärme durch mechanische Verluste wegen zum Beispiel mangelnder Zahnräder entstehen kann.

Insbesondere ist ein elektrischer Startermotor oder Generator zwischen den beiden Lagerstellen des die beiden Turbinen aufweisenden Aggregats vorgesehen. Der Starter bzw. Generator ist als Kurzschlußlaufmotor oder als Generator mit einem Läufer mit Permanentmagneten ausgebildet. Im Betrieb der Gasturbinen kann der Generator elektrische Geräte speisen. Beispielsweise kann die Starterbatterie aufgeladen werden. Die Turbine auf der Frischgasseite kann auch als Axialstufe ausgebildet sein. Insbesondere sind die Turbinenleitschaufeln und die Verdichlerschaufeln in einem einstückigen Rotor angeordnet. Durch einen solchen Aufbau werden die Maßnahmen zur Verhinderung der Eisbildung verstärkt.

Bei einer weiteren zweckmäßigen Ausführungsform ist zwischen den beiden Lagerstellen der Gasturbineneinheit der Läufer einer elektrischen Maschine wie Generator angeordnet. Die beiden Lagerstellen der Maschine bzw. des Generators sind hierbei zugleich die Lager der Gasturbineneinheit. Die erzeugte elektrische Energie wird z. B. bei dem Betrieb einer Kühlanlage benutzt.

Die Erfindung bezieht sich auch auf eine Anordnung zur Konditionierung von Luft, die sich dadurch auszeichnet, daß eine Verdichter-Turbinen-Anordnung von über zwei Lager abgestützter Welle ausgeht, und daß auf der Welle zumindest eine weitere Turbine gelagert ist, der über einen einem oder dem Verdichter nachgeschalteten Wärmetauscher komprimierte Luft zuführbar ist.

Insbesondere ist vorgesehen, daß der weiteren Turbine Zapfluft der Verdichter-Turbinen-Anordnung zuführbar ist. oder daß der weiteren Turbine von auf der Welle gelagertem weiteren Verdichter komprimierte Luft zuführbar ist. Ferner kann auf der Welle ein Rotor eines Generators angeordnet sein.

Eine besonders hervorzuhebende eigenerfinderische Ausgestaltung bezieht sich auf eine Anordnung zum Konditionieren von Luft, die sich dadurch auszeichnet, daß eine Turbinen-Verdichter-Anordnung auf einer Welle gelagert ist, daß verdichtete Luft des Verdichters über einen Wärmetauscher der Turbine zuführbar ist und daß die Welle über ein Untersetzungsgetriebe mit einer weiteren antreibbaren Welle verbunden ist.

Dabei kann das Untersetzungsgetriebe ein zwischen oder außerhalb von zwei Lagern der Welle gelagertes Planetengetriebe sein, von dessen Glockenrad die zweite Welle ausgeht, mit der eine Pumpe und/oder ein Ventilator verbindbar ist, wobei die zweite Welle gleichachsig mit der Welle verläuft.

Ferner kann die weitere Welle über einen Diesel-, Otto- oder Elektro-Motor oder eine Gasturbineneinheit antreibbar sein.

Schließlich bezieht sich die Erfindung auf ein Turbokompressoraggregat, das dadurch geekennzeichneet ist, daß das Turbokompressoraggregat eine auf einer Welle gelagerte Turbokompressoreinheit umfaßt, daß zwischen zwei oder außerhalb von zwei Lagern der Welle ein Untersetzungsgetriebe gelagert ist, von dem eine weitere Welle ausgeht, die über ein Antriebsaggregat antreibbar ist.

Das Untersetzungsgetriebe ist ein Planetengetriebe, dessen Glockenrad von der mit dem Antriebsaggregat verbindbaren weiteren Welle ausgeht, die ihrerseits gleichachsig zu der Welle der Turbokompressoreinheit verläuft.

Weitere Einzelheiten, Merkmale und Vorteile der Erfindung ergeben sich nicht nur aus den Ansprüchen - für sich und/oder in Kombination -, sondern auch aus der nachfolgenden Beschreibung von in einer Zeichnung dargestellten bevorzugten Ausführungsbeispielen.

Es zeigen:
- Fig. 1: eine Gasturbineneinheit in Seitenansicht, teilweise im Schnitt,
- Fig. 2: einen Ausschnitt der Gasturbineneinheit gemäß Fig. 1 mit Details,
- Fig. 3: einen Abschnitt einer Platte mit Verdichter- und Turbinenleitschaufeln in Seitenansicht,
- Fig. 4: einen Schnitt längs der Linien I-I der in Fig. 3 dargestellten Platte mit Ver-dichter, und Turbinenleitschaufeln,
- Fig. 5: ein-Teil einer Platte zwischen Verdichter- und Turbinenteil und einer der Gehäusewände im Querschnitt,
- Fig. 6: eine andere Ausführungsform einer Platte mit Verdichter- und Turbinenleitschaufeln in Seitenansicht,
- Fig. 7: eine weitere Ausführungsform einer Platte mit Verdichter- und Turbinenleitschaufeln in Seitenansicht,
- Fig. 8: ein Aggregat aus einer Gasturbineneinheit in Kombination mit einem elektrischen Generator und einer von einem elektrischen Motor angetriebenen Turbinen-Verdichtungseinheit schematisch, teilweise im Schnitt,
- Fig. 9: eine Gasturbineneinheit mit Hilfsaggregaten für die Gasturbine und einer Schnellbefestigungseinrichtung für die Verbindung mit Getrieben bzw. Drehmomentwandlern in Seitenansicht,
- Fig. 10: ein Aggregat aus einer Gasturbineneinheit, einem elektrischen Generator und einer Verdichter- Turbineneinheit für Luft schematisch in Längsschnitt,
- Fig. 11: ein Aggregat aus einer Gasturbine, einer elektrischen Maschine und einer Turbinenstufe, der Zapfluft von der Verdichterstufe über einen Wärmetauscher zugeführt wird, schematisch im Längsschnitt,
- Fig. 12: ein Aggregat für den Antrieb mit einem ankuppelbaren Motor mit einem Verdichter und einem Getriebe im Längsschnitt,
- Fig. 13: ein Aggregat mit einer Turbine, einem Getriebe, einem Verdichter und Hilfsaggregaten im Längsschnitt.

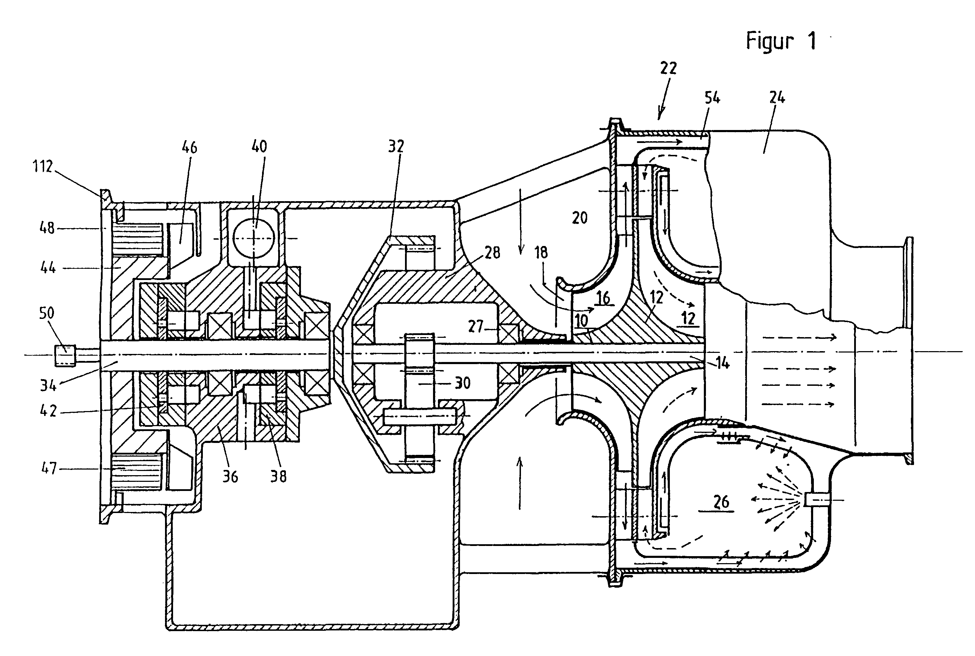

In Fig. 1 ist in Seitenansicht, teilweise im Schnitt, ein Nebenstrom-Gasturbinenaggregat, das ein Verdichterlaufrad 10 und ein Turbinenlaufrad 12 enthält, dargestellt. Das Verdichterlaufrad 10 und das Turbinenlaufrad 12 sind nebeneinander auf der gleichen Welle 14 angeordnet. Insbesondere sind das Turbinenlaufrad 12 und das Verdichterlaufrad 10 einstückig ausgebildet in Form eines Turbinenrotors. Das Verdichtungslaufrad 10 hat Verdichterlaufschaufeln 16, die axial Luft über eine Öffnung 18 in der Stirnwand 20 eines Gehäuses 22 ansaugen und die Luft radial verdichten. Die ringförmige Stirnwand 20 bildet eine Seite des Gehäuses 22, das noch einen hohlzylindrischen Gehäuseabschnitt 24 hat, der u.a. eine Brennkammer 26 einschließt.

Der Turbinenrotor ist fliegend gelagert. Ein Lager 27 der Welle 14 befindet sich in einer Stirnwand eines Gehäuses 28, das mit dem Gehäuse 22 verbunden ist und ein Planetengetriebe 30 als Untersetzungsgetriebe enthält. Das zweite Lager 32 der Welle befindet sich ebenfalls im Gehäuse 28. Die Planeträder des Getriebes sind nicht näher bezeichnet. Ein Glockenrad ist am Ende einer Welle 34 befestigt, die in einem Pumpenblock 36 an zwei Stellen drehbar gelagert ist, die nicht näher bezeichnet sind. Der Pumpenblock 36 enthält eine Ölpumpe 38, deren nicht näher bezeichnetes Pumpenrad von der Welle 34 angetrieben wird. Im Pumpenblock 36 ist im Zuge der Ölleitungen ein Filter 40 angeordnet. Weiterhin befindet sich im Pumpenblock 36 eine Kraftstoffpumpe 42, mit der Kraftstoff der Brennkammer 26 zugeführt wird. Mit der Welle 34 ist weiterhin der Rotor 44 eines Startergenerators verbunden, an dem noch ein Luftrad 46 befestigt ist. Der Starter 47 des Generators ist an einem Flansch 48 befestigt, von dem ein Wellenstumpf 50, für den Anschluß von Kraftmaschinen nach außen ragt. Die Ölpumpe 38, die Kraftstoffpumpe 42, das Luftrad 46 und der Starter-Generator werden im folgenden auch als Hilfsaggregat bezeichnet.

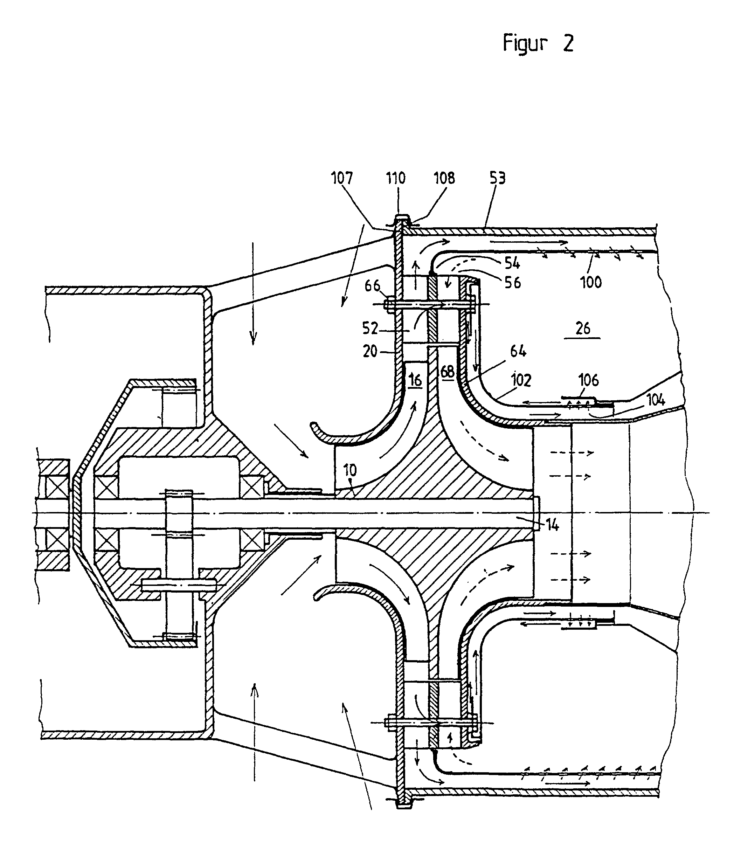

Der Aufbau der Gasturbine und des Verdichters wird im folgenden näher in Verbindung mit Fig. 2 beschrieben:

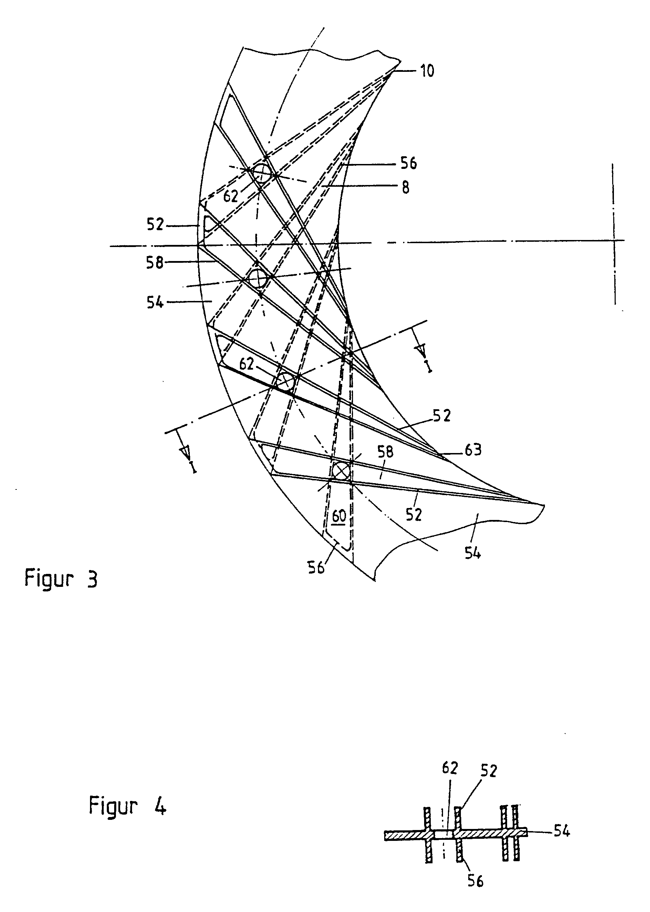

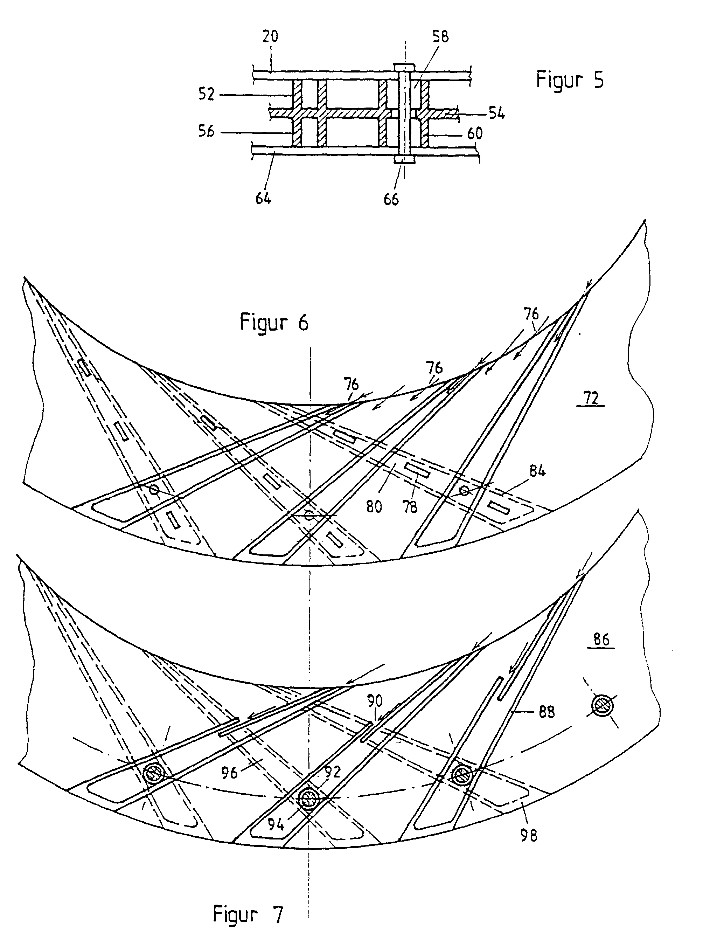

Radial außen an den Laufschaufeln 10 des Verdichters 10 befinden sich Diffusorschaufeln 52, die die komprimierte Luft einem Kanal 53 zuführen, der die Luft in die Brennkammer leitet. Die Diffusorschaufeln 52 springen von einer Seite einer Platte 54 vor, von deren anderer Seite Leitschaufeln 56 der Turbine ausgehen. Die Platte 54 trennt somit den Verdichter vom Turbinenteil. Die Diffusorschaufeln 52 enthalten Hohlräume 58, was insbesondere in den Fig. 3 bis 7 dargestellt ist. Auch die Turbinenschaufeln 56 enthalten Kühlkanäle bzw. Hohlräume 60. An denjenigen Stellen der Platte 54, an denen sich auf der einen Seite die Hohlräume 58 der Diffusorschaufeln 52 und auf der anderen Seite die Hohlräume 60 der Leitschaufeln verbinden, sind Kanäle bzw. Öffnungen 62 in der Platte 54 vorhanden, über die die Hohlräume 58, 60 miteinander in Verbindung stehen. Die Leitschaufeln 52 sind an ihren, den Laufschaufeln 16 zugewandten Enden mit Öffnungen 63 versehen, durch die Luft in die Hohlräume 58 eindringt. Von dort gelangt die Luft über die Öffnungen 62 in die Hohlräume 60, wodurch die Turbinenleitschaufeln 56 gekühlt werden. Die Fig. 4 zeigt die ringförmige Platte 54 mit den Verdichterleitschaufeln 52, den Turbinenleitschaufeln 56 und den Öffnungen 62 im Querschnitt. Aus den Fig. 2 und 5 ist ersichtlich, wie die Platte 54 in der Gasturbine befestigt ist. In Bohrungen der Stirnwand 20 und in die Öffnungen 62 sowie in Bohrungen einer Gehäusewand 64 eines doppelwandigen Gehäuses innerhalb des Gehäuses 22 sind Bolzen 66 eingesetzt, die die Platte 54 zwischen der Stirnwand 20 und der Gehäusewand 64 halten. Die Durchmesser der Bolzen 66 füllen die Öffnungen 62 in der Platte 54 nicht aus, so daß durch die verbleibenden freien Stellen noch die Kühlluft in die Hohlräume 60 der Turbinenleitschaufeln 56 eindringen kann. Die Turbinenleitschaufeln 56 haben an ihren, den Turbinenlaufrädern 68 zugewandten schmalen Enden bzw. thermisch kritischen Bereichen ebenfalls Öffnungen 70, durch die die Kühlluft aus den Hohlräumen 60 austritt und die Leitschaufelspitzen kühlt.

In Fig. 6 ist bei einer Platte 72 mit Verdichterleitschaufeln durch Pfeile 76 der Strömungsverlauf deutlich gekennzeichnet. Wenn der Querschnitt neben den Bolzen 66 für den Luftdurchsatz zu gering ist, sind gemäß Fig. 6 Öffnungen 78 in der Platte vorhanden, die auf der der Turbinenseite in Kühlkanal bzw. Hohlräumen 80 der Turbinenleitschaufeln 84 einmünden, wodurch Luft von der Verdichterseite in die hohlen Turbinenleitschaufeln 84 gelangt.

In Fig. 7 ist eine Platte 86 mit Diffusorschaufeln 88 dargestellt, die nicht nur an den Spitzen 90 Schlitze für die Luftzufuhr sondern auch noch zwischen ihren Enden durch Unterbrechung und Versatz der den Laufschaufeln zugewandten Leitschaufelwände Schlitze aufweisen, durch die Kühlluft in die hohlen Leitschaufeln eintritt. Aus den Hohlräumen strömt die Kühlluft durch die ringförmigen Öffnungen 92 zwischen den Befestigungsbolzen 94 in die in Fig. 7 mit 96 bezeichneten Kühlkanäle bzw. Hohlräume von Turbinenleitschaufeln 98.

Der Kanal 53 hat Öffnungen 100, durch die Kühlluft aus dem Kanal in den Brennraum 26 eintritt, so daß die Kanalwände auch auf der Brennraumseite gekühlt werden. Die Wand 64 hat Durchlässe für die Bolzen 66, die einen ringförmigen Spalt zwischen den Bolzen und dem äußeren Durchmesser der Durchlässe frei lassen. Durch diese Spalte strömt Kühlluft in ein inneres doppelwandiges Gehäuse, dessen eine Wand 64 die Nozzle bildet. Die zweite Wand 102 bildet ein Hitzeschild und begrenzt auf ihrer Seite die Brennkammer 26 bzw. schützt die Wand 64. In dieser Wand 102 sind an verschiedenen Stellen kleine düsenförmige Öffnungen 104 vorhanden, durch die die Kühlluft in die Brennkammer 26 gelangt und dabei die Wand 102 auch von der Brennkammerseite aus kühlt. Über den Öffnungen 104 bzw. einer Gruppe solcher Öffnungen können Umlenkplatten 106 in der Brennkammer angeordnet sein. Diese Umlenkbleche 106 leiten die Kühlluft längs der Wand 102, wodurch die Kühlung verstärkt wird. Die Platte 54 mit den Leitschaufeln kann aus Keramik bestehen.

Die oben beschriebene Ausbildung der Gasturbine ermöglicht die Bereitstellung eines kompakten autarken, modulartigen Gasturbinenaggregats, das mit einer Vielzahl von Betriebsstoffen - flüssig oder gasförmig - betrieben werden kann.

Es wird dabei ein autarkes modulmäßig aufgebautes System zur Verfügung gestellt, welches nachfolgend beschriebene Charakteristiken aufweist und mit einer Vielzahl von Betriebsstoffen - flüssig oder gasförmig (Biogas/Umwelt) - betrieben werden kann.

Bei der oben erläuterten Nebenstrom-Gasturbine wird der Luftstrom im Diffusor gesplittet und zwar so, daß z.B. mittels düsenförmigen Öffnungen im Diffusor die vom Verdichter herrührende Gasströmung durch die auf gegenüberliegenden Seite der Diffusorplatte 54 befindliche Turbinenstatorschaufeln 56 preßt und somit eine extreme Kühlung dieser Schaufeln stattfindet. Teilweise wird örtlich diese Luft auch dazu benutzt, um an besonderes kritische Heißzonen der Statorblätter etwas von dieser Luft austreten zu lassen, um eine Filmkühlung und/oder Schwitzkühlung der Statorblätter zu schaffen. Da die Diffusorplatte 54 als Träger der Verdichterleitschaufeln 52 und der Turbinenleitschaufeln 56 dient und somit als Trennglied zwischen Kalt- und Heißteil fungiert, werden die Turbinenleitschaufeln 56 auch sehr effektiv durch eine Konvektionskühlung vor Überhitzung geschützt. Außerdem entsteht ein sehr einfach und kostengünstig herstellbares und leicht bearbeitbares Werkstück, welches sich sogar billigst und einfach in Keramik herstellen läßt.

Das Frischgas kühlt - nachdem es die Leitschaufeln durchströmt hat - auch das Gehäuse/Nozzle, welches das Turbinenrad umgibt, in dem das Hitzeschild 102 die Nozzle vor der direkten Beaufschlagung des von der Brennkammer austretenden Heißgases schützt. Man kann auch sagen, daß dieses Hitzeschild 102 schon einen Teil der Brennkammer darstellt und von einer Seite zwangsmäßig gekühlt wird, weil das durch die Leitschaufeln gepreßte Frischgas mittels axialer Öffnungen in der Nozzle in den Hohlraum gelangt, welcher zwischen Nozzle und Hitzeschild vorhanden ist. Im Bereich des Nozzleendes befinden sich kleine radiale Öffnungen im Hitzeschild/Brennkammer. Diese dienen dem Zweck der weiteren Kühlung dieses Hitzeschildes 102, in dem das Frischgas mittels einer in einem geringen Abstand über den Öffnungen plazierte Schürze die Strömung umlenkt und sich nun ein Kühlfilm über die andere Seite des Hitzeschildes 102 legt, bis hin zum Eintritt in den Turbinenleitschaufelring.

Der Kühlluftstrom wird also im vollen Umfang der Brennkammer 26 zugeführt und geht nicht verloren. Er erwärmt sich kontinuierlich auf dem Wege bis hin zur Brennkammer 26, was wiederum eine Gesamtwirkungsgradverbesserung zur Folge hat. Die oben erwärmten axialen Öffnungen in der Nozzle sind vorzugsweise so plaziert, daß sie mit den axialen Öffnungen in der Diffusorplatte 54 und dem Verdichtereinlaufgehäuse auf dem gleichen Teilkreis liegen. Somit ergibt sich die Möglichkeit, das gesamte Paket (Verdichtereinlaufgehäuse, Diffusorplatte 54, Nozzle, Hitzeschild 102) miteinander zu verspannen.

Damit die rotierenden Teile ebenfalls höheren Belastungen standhalten, ist nun das Verdichter- und Turbinenlaufrad 10, 12 aus einem einzigen Werkstück (Rohling) hergestellt und die Lagerbasis dieses Rotors so konstruktiv ausgelegt, daß diese sich außerhalb des Heißteils befindet, d.h. Richtung Antriebsseite. Der Rotor wird am Umfang zwischen Verdichter und Turbine, d.h. zwischen dem radialen äußeren Rand des Rotors und der Diffusorplatte 54 labyrinthähnlich abgedichtet, so daß nur geringfügige Frischgasverluste in Richtung Heißteil zu erwarten sind, diese aber dort die Blattspitzen beaufschlagen und somit wiederum der Kühlung dienlich sind.

Der Rotor ist so gestaltet, daß die Turbinenschaufeln teilweise hohl sind bzw. Kanäle aufweisen und Frischgas von der Verdichterseite durch die Blattschaufeln der Turbinenseite gegen die Innenwand der diese umgebende Nozzle strömen kann. Auch können Öffnungen vorgesehen sein, welche die Turbinenschaufeln mit einer Film- und/oder Schwitzkühlung versehen.

Die Stirnwand 20 und das Gehäuse an einem abgewinkelten Ende, das an die Stirnwand an deren äußeren Rand angelehnt ist, bilden einen Bund bzw. Wülste 107, 108, die durch ein V-Profil-Spannband 110 (Quick-Disconnect-Verbindung) miteinander verbunden sind. Die Verbindung kann bei Bedarf, z.B. bei Inspektions- und Wartungsarbeiten sehr schnell gelöst werden, so daß die Sicht auf die verdichter- und turbinenseitigen Schaufeln freigegeben wird.

Das nachgeschaltete Untersetzungsgetriebe sorgt für das gewünschte Drehmoment (vorzugsweise Planetengetrieben). Das Sonnenrad des Planeten ist bereits auf der Rotorwelle 14, somit erübrigen sich zusätzliche Lagerstellen, d.h. Turbinenrotor und Planet kommt mit insgesamt zwei Lagerstellen für den schnellen und daher kritischen Bereich aus.

Es erübrigt sich somit auch ein Verbindungsstück (Quirlschaft bzw. Knochen).

Über schräg verzahnte Planetenräder können Axialkräfte, welche aus dem Rotorgetriebe resultieren, weitestgehend kompensiert werden, in dem sie entweder von dem Planetenträger oder der Lagerbasis des Glockenrades aufgenommen werden, je nach Ausgestaltung des Planetengetriebes.

Das Aggregat hebt sich auch in seiner weiteren Ausgestaltung von herkömmlich bekannten Systemen ab, weil z.B. keine weiteren Zahnräder und Getriebe für Accessories vorhanden sind.

Was die Herstellungskosten, das Gewicht und das Volumen senkt und gleichzeitig die Zuverlässigkeit, Wirtschaftlich keit erheblich verbessert, wurde dadurch ermöglicht, indem auf die Welle 34 des Glockenrades (= Abtriebswelle) die Ölpumpe für die Schmierung und ferner eine Pumpe für die Zuverfügungstellung der Kraftstoffmenge und des benötigten Druckes integriert wurden (Öl- und Kraftstoffilter wurden ebenfalls direkt in diesem Gehäuse untergebracht). Gleichermaßen befindet sich auf der Abtriebswelle der Starter und Generator bzw. Startergenerator, welcher sowohl als Gleichstrom wie auch als Wechsel-/Drehstromvariante ausgebildet sein kann. In dem die Welle umgebenden Gehäusehals befindet sich auch das Kühlgebläse, welches ebenfalls mit der Abtriebswelle in Verbindung steht und nicht nur den elektrischen Part der Anlage kühlt, sondern auch das verrippte Getriebegehäuse/Öl durch die entsprechend angeordnete Luftführung. Auf einen zusätzlichen Ölkühler kann somit verzichtet werden. Bei extremen Lastfällen wird dieser dem Gebläse strömungsmäßig nachgeschaltet.

Bei den erfindungsgemäßen Gasturbinen kann auf schwere Gehäuse und Vorrichtungen für Kraftstoffpumpe, Ölpumpe, Anlasser, Generator, Kühlgebläse und sonstige Accessories verzichtet werden, d.h., daß nur zwei Lager insgesamt für alle diese Baugruppen incl. der Abtriebswelle nötig sind.

Durch die Erfindung ist es nun möglich, ein Antriebsaggregat zur Verfügung zu stellen, welches z.B. bei einer Leistung von 150 KW nur ein Gewicht von ca. 20 kg aufweist, mit geringerer Kraftstoffmenge auskommt und somit einen höheren Wirkungsgrad aufweist. Die Wartungs- und Inspektionsintervalle werden reduziert und die Zuverlässigkeit gesteigert.

Das Turbinenpaket/Modul ist so handlich und leicht, daß auf eine Verbindung mittels z.B. Stehbolzen zwischen Turbine und den wahlweise nachgeschalteten diversen austauschbaren anzutreibenden Aggregaten verzichtet werden kann.

Der Flansch 48, der das Getriebegehäuse zur Seite der anzuschließenden Maschinen oder Geräte abschließt, weist an seinem äußeren Rand einen Bund 112 auf, der in Verbindung mit einem entsprechenden Bund des jeweils anzuschließenden Gerätes zum Anlegen eines V-Profil-Spannbandes geeignet ist. Eine solche Quick-Disconnect-Verbindung erlaubt die Verbindung und Lösung der Gasturbineneinheit mit Maschinen wie Pumpen, Generatoren, Fahrzeugen, Hubschraubern, Motorbooten oder Baumaschinen.

Es steht demnach ein Antriebssystem zur Verfügung, welches prädestiniert ist zum vielseitigen Einsatz (Polizei, Katastrophenschutz, Feuerwehr, Flughäfen, Automobilhersteller, Flugzeuge- und Hubschrauberhersteller, Klimaaggregatehersteller etc.).

Das gleiche Aggregat kann z.B. erst als Antriebssystem in einem Fahrzeug (Jeep) und danach z.B. als Antrieb für eine Feuerlöschpumpe etc. benutzt werden.

Für die Zurverfügungstellung von elektrischer Energie für z.B. die Flugzeugbordstrom-Versorgung 400 Hz können autarke Energiepakete zur Verfügung gestellt werden, welche mit der oben beschriebenen Schellenverbindung mit der Turbine verbunden werden können.

Diese Gasturbinenaggregate bzw. Energiepakete wie auch sämtliche anderen Aggregate können auch an einen Elektromotor oder an das MGU-System (Dieselmotor/Elektromötor oder auch Ottomotor) angehängt werden. Das Energiepaket mit elektrischer Maschine weist darüber hinaus noch folgende nicht zwingende Merkmale auf:
integrierte Kühlung, integrierte Spannungsregelung, integrierter Überlastschutz, integrierte Lastschaltkontakte, wie z.B. 3-Phasenrelais, integrierte Instrumentierung, welche wahlweise abgenommen und mittels Verbindungskabel auch als Fernbedienung verwendet werden kann, integrierte Unter-/Überspannung, integrierte Unter-/Überfrequenz. Gewicht eines 90 KVA, 400 Hz Energiepaktes für Flugzeuge etc. ca 55 kg.

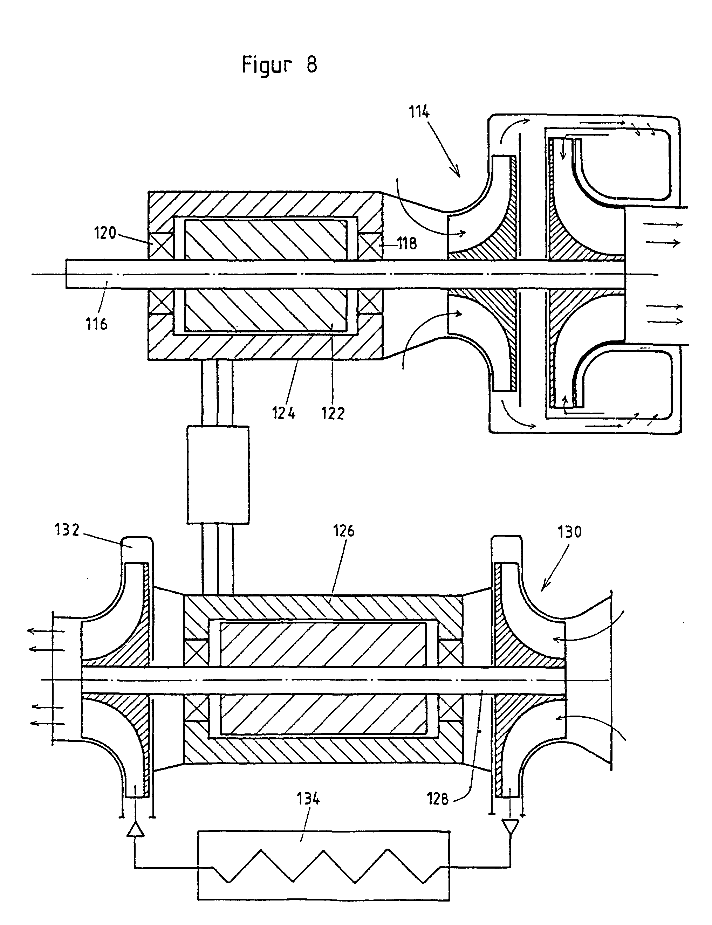

Die Fig. 8 zeigt eine Gasturbineneinheit 114, die in bezug auf die Verdichter- und Turbinenstufe den in den Fig. 1 bis 7 dargestellten Aufbau hat, jedoch auf ihrer Turbinenwelle 116, die nur zwei Lagerstellen 118, 120 hat, den Läufer 122 einer elektrischen Maschine 124 trägt. Diese Maschine 124 arbeitet als Generator, der Strom einem elektrischen Motor 126 zuführt, dessen Rotorwelle 128 an ihren Enden jeweils einen Verdichter 130 und eine Turbine 132 trägt. Der Verdichter 130 komprimiert Luft, die über einen Wärmetauscher 134 der Turbine 132 zugeführt wird, in der sich die Luft entspannt. Die Vorrichtung gemäß Fig. 8 dient zur Erzeugung konditionierter Luft, z.B. Kühlluft.

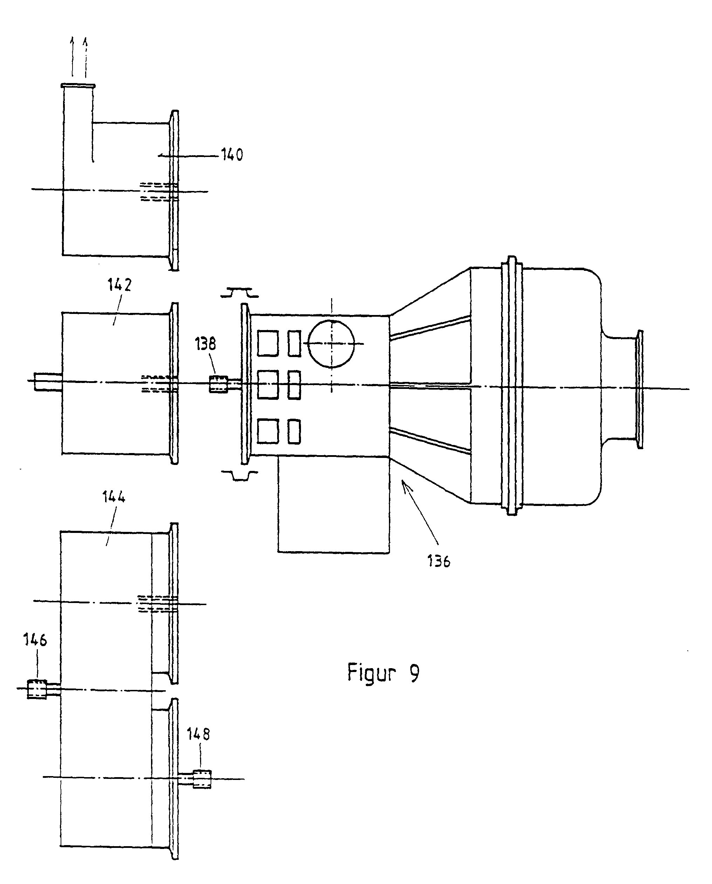

Die Fig. 9 zeigt ein Gasturbinenaggregat 136 mit dem in Zusammenhang mit den Fig. 1 bis 7 beschriebenen Aufbau. Die Abtriebswelle 138 kann wahlweise mit einem Energiewandler 140, einem stufenlosen Getriebe 142 oder einem Verteilergetriebe mit wenigstens zwei Ausgangswellen 146, 148 verbunden werden, ohne daß hierdurch eine Einschränkung der Erfindung erfolgen soll. Vielmehr werden rein beispielhaft Anwendungsfälle der erfindungsgemäßen Lehre aufgezeigt.

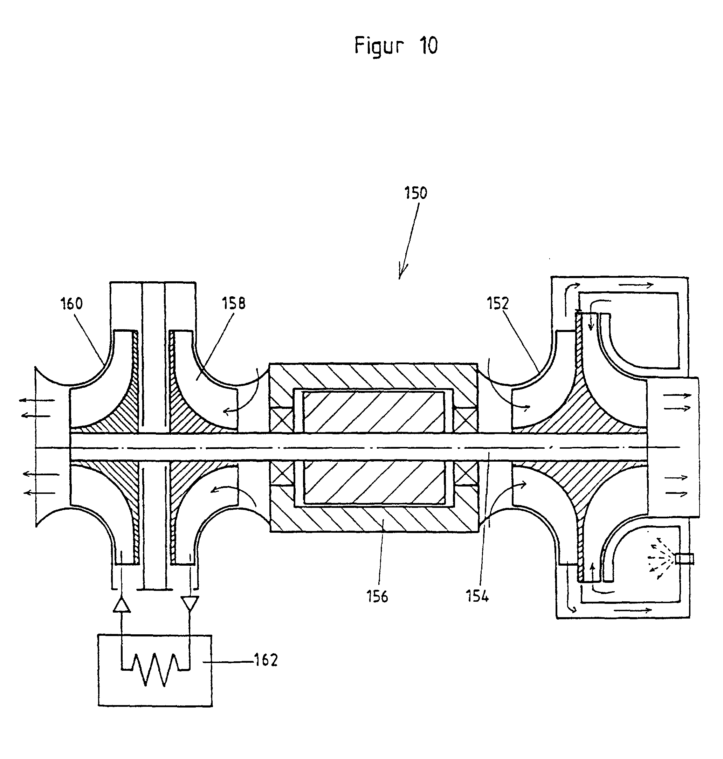

In Fig. 10 ist eine Kleingasturbine 150 (Leistungsbereich 3 - 300 KW) dargestellt, mit der keimfreie, konditionierte Luft erzeugt werden kann, die z.B. zum Kühlen oder Heizen verwendet wird. Die Kleingasturbine 150 enthält eine Verdichter-Turbineneinheit 152, wie sie oben im Zusammenhang mit Fig. 1 bis 7 beschrieben wurde oder eine sonstige bekannte bzw. konventionelle Verdichter-Turbinenanordnung bzw. eine Anordnung, bei der der Rotor mit den Verdichter- und Turbinenlaufschaufeln nicht einstückig ausgebildet ist.

Auf der Turbinenwelle 154 sitzt der Rotor einer elektrischen Maschine 156. Auf dem zweiten Ende der Rotorwelle 154 ist ein Verdichter 158 und eine Turbine 160 angeordnet. Die vom Verdichter 158 komprimierte Luft wird über einen Wärmetauscher 162 geleitet und gelangt anschließend in die Turbine 160. Die Kleingasturbine 150 erzeugt pneumatische und elektrische Energie.

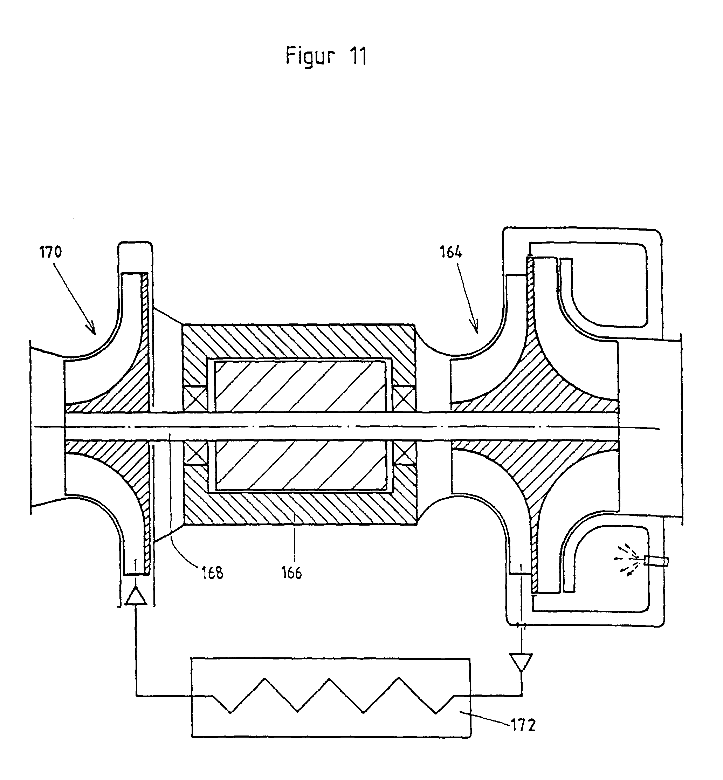

In Fig. 11 ist eine Gasturbineneinheit 164 mit einer elektrischen Maschine 166 versehen. Auf dem einen Ende der Turbinenwelle 168 ist eine Turbine 170 mit ihrem Laufrad fliegend gelagert. Der Turbine 170 wird Zapfluft aus der Verdichterstufe der Gasturbine über einen Wärmetauscher 172 zugeführt. Die Vorrichtung gemäß Fig. 11 kann elektrische Energie und/oder pneumatische Energie oder konditionierte Luft zum Kühlen oder Heizen erzeugen.

Mit der erfindungsgemäßen Gasturbineneinheit kann ein Hydraulik- und Stromversorgungspaket für die Versorgung von diversen Hubschraubern bereitgestellt werden. Weiterhin kann die erfindungsgemäße Gasturbineneinheit mit einem Turbokompressor ein Turbokompressorpaket für die Erzeugung von Startluft bilden.

Eine weitere Anwendungsmöglichkeit ist die Verbindung der erfindungsgemäßen Gasturbine mit einem Hochdruckkompressor für pneumatische Werkzeuge, Druckauffüllen von Fahrzeugzylindern, Druckspeichern, Pressluftflaschen etc..

Ferner kann die erfindungsgemäße Gasturbine eine Löschpumpe für Feuerwehr oder Trinkwasserversorgung antreiben.

Die Fig. 10 und 11 zeigen Turbokompressorpakete für die Erzeugung konditionierter Luft und gegebenenfalls elektrischer Energie.

Die erfindungsgemäße Gasturbineneinheit kann eine Wasserstrahlpumpe für Bootsantriebe und zur Absaugung von Ölteppichen bei Tankerunfällen antreiben.

Weiterhin kann eine zusätzliche Warmwasserversorgung, mittels Wärmetauscher im Abgas- strom zur Verfügung gestellt werden.

Die angetriebenen elektrischen Maschinen dienen der elektrischen Energieversorgung 50/60 Hz.

Die erfindungsgemäße Gasturbine kann auch als Energiepaket für Flugzeugantriebe verwendet werden, mit einem Reduktionsgetriebe und einem Propeller z.B. einer Mantelschraube.

Dieses Paket kann konventionell mit der Zelle eines Luftfahrzeuges verbunden sein. Das Antriebsaggregat besteht aus der erfindungsgemäßen Turbine mit Quick-Disconnect-Verbindung (V-Schelle). Bei einem Triebwerkwechsel sind nur wenige Handgriffe notwendig. Gleichermaßen zutreffend ist dies auch für Hubschrauber.

Für den Einsatz in der Automobilindustrie, z.B. Lkw, ist das System mit einem autarken stufenlosen Getriebe, z.B. nach dem PIV- oder van Dornen-Prinzip versehen. Die Einheit kann auch dort eingesetzt werden, wo große bzw. wechselnde Drehmomente häufig vorkommen: Flugzeugschlepper, Traktoren, Baumaschinen.

Die oben beschriebenen Gasturbinen arbeiten stufenlos, pulsationsfrei und können ölund keimfreie, heiße oder kalte Luft sowie Strom liefern. Betrieben werden können sie mit Brennstoffen wie Diesel, Benzin, Naturgas, Biogas, Alkohol, Wasserstoff und Gemischen. Diese Turbinen kommen mit nur zwei Lagerstellen aus. Die Achs- und Radialkräfte können weitestgehend ausgeglichen werden. Das Turbinensystem besteht auf der einen Seite z.B. aus einer Gasturbine der vorher beschriebenen Art, wobei das Turbinenrad aber auch eine Axialstufe sein kann. Die Rotorwelle mündet auf der Austrittsseite nicht in ein Planetengetriebe, sondern trägt zumindest ein Turbinenrad wie Gehäuse. Diesem Turbinenrad wird über einen Wärmetauscher Zapfluft aus der verdichterseitigen Antriebsturbine zugeführt, wo sie entspannt und durch entsprechende Regelungsmaßnahmen die gewünschte konditionierte Luft liefert (Fig. 11). Eine solche Anordnung ist besonders hervorzuheben.

Eine andere Ausführungsform besteht aus einem Verdichter- und einem Turbinenrad, welche beide ebenfalls auf der Rotorwelle sitzen. Anstelle der Zapfluft erzeugt hier die separate Verdichterstufe den Luftdurchsatz, welcher in der beschriebenen Weise am Turbinenrad Arbeit leistet und entspannt (Fig. 10). Diese Variante hat den Vorteil, daß ohne Leistungsverluste auf der Antriebsseite/Turbine der anzusaugenden Luft ein Filter vorgeschaltet werden kann und die Luft auch nicht mit dem Verbrennungsgas der Antriebsturbine in Berührung kommt. Die beiden einzigen Lagerstellen dieses Aggregates können mit Fettkammern versehen sein oder eine Ölschmierung erhalten.

Der Starter der Anlage bzw. der Generator befindet sich zwischen den beiden Lagerstellen. Vorzugsweise besteht dieser Motor/Generator aus einem Kurzschlußläufer oder mit permanentmagnetbestücktem Rotor und einer entsprechenden Feldwicklung. Im Betrieb können von dieser Stromquelle elektrische Geräte betrieben werden und z.B. die Starterbatterien neu aufgeladen werden. Das Turbinenrad auf der Frischgasseite kann auch als Axialstufe ausgeführt sein. Bei der Verwendung eines Verdichter-/Turbinenrades aus einem Guss besteht möglicherweise ein kleiner Vorteil, welcher bei den Maßnahmen die für die Eliminierung von Eisbildung herangezogen werden, unterstützend wirkt. Konvektion.

Die in Fig. 8 dargestellte Gasturbine treibt ohne Zwischengetriebe einen Stromerzeuger an. Die beiden Lagerstellen des Stromerzeugers sind auch gleichzeitig die Lagerbasis des Turbinenrotors - eine Welle. Die erzeugte Wechsel-/Drehstromspannung wird herangezogen für den Betrieb einer Kühlanlage.

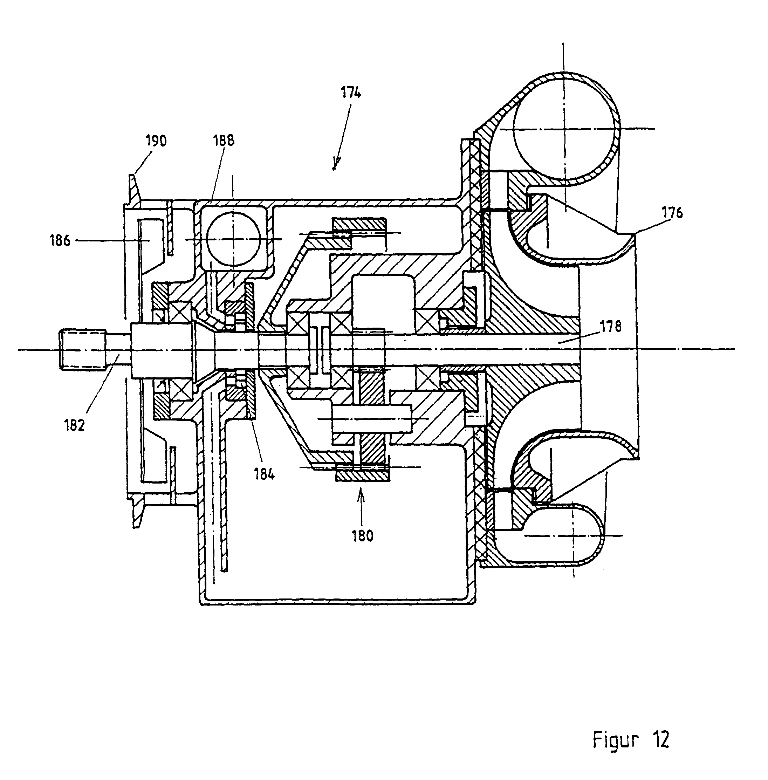

Die Fig. 12 zeigt ein Turbokompressoraggregat 174, das für den Antrieb durch Diesel-, Otto-, Elektromotor oder durch die oben beschriebene Gasturbineneinheit geeignet ist. Das Turbokompressoraggregat 174 weist eine Turbokompressoreinheit 176 auf, die fliegend auf einer Welle 178 gelagert ist, die zwei nicht näher bezeichnete Lager enthält. Zwischen den beiden Lagern ist ein Planetengetriebe 180 angeordnet, dessen Glockenrad auf einer Welle 182 sitzt, mit der eine Pumpe 184 und ein Lüfter 186 verbunden ist.

Das Gehäuse 188, in dem sich das Planetengetriebe 180, die Pumpe 184 und der Lüfter 186 befinden, hat einen Bund bzw. Wulst 190 zum Anschluß mittels V-Profil-Spannband an die Antriebsmaschine.

Das Turbokompressoraggregat 174 kann als Airport-Back-Up-System und als Universalgerät für technische Hilfsdienste eingesetzt werden. Weiterhin ist ein Einsatz in Fahrzeugen, Baumaschinen, Hubschraubern und Flugzeugen etc. möglich.

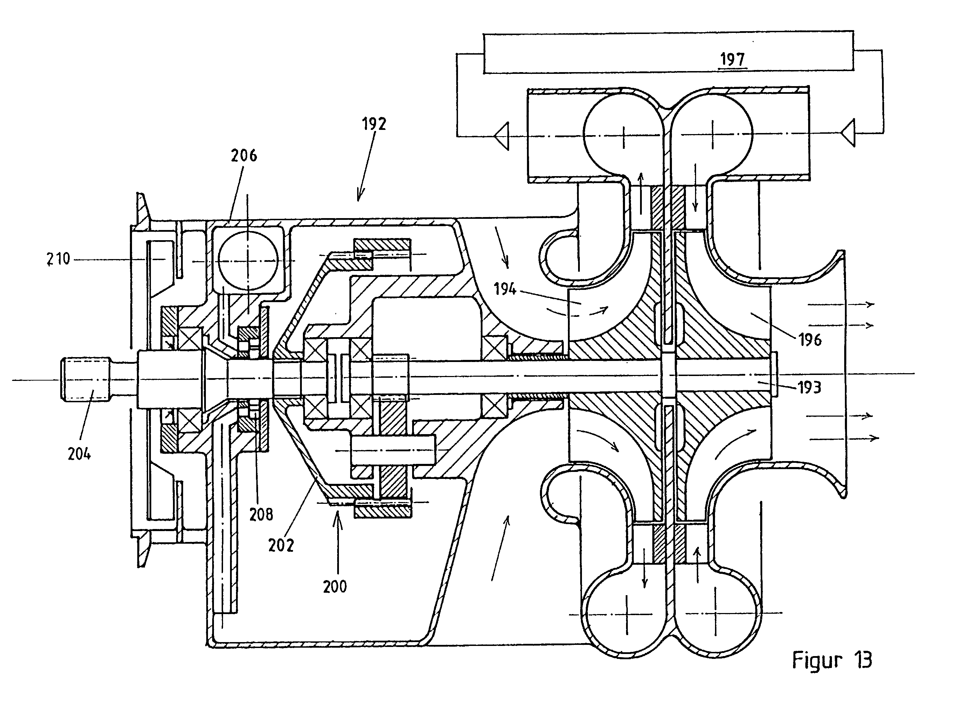

Die Fig. 13 zeigt ein besonders hervorzuhebendes und damit eigenerfinderisches Aggregat 192, das für Airconditioning-Aufgaben bestimmt ist und von den gleichen Maschinen angetrieben werden kann wie das in Fig. 12 dargestellte Turbokompressoraggregat. Eine Einheit aus Verdichter 194 und Turbine 196, die luftmäßig über einen Wärmetauscher 197 verbunden sind, um konditionierte Luft zu erhalten, sitzt auf einer Welle 198 bzw. ist auf dieser fliegend gelagert. Mit der Welle 198 ist weiterhin ein Planetengetriebe 200 verbunden, dessen Glockenrad 202 an einem Ende einer Welle 204. angeordnet ist, die für die Verbindung mit der Antriebsmaschine bestimmt ist. Mit der Welle 204 ist im Gehäuse 206 eine Pumpe 208 und ein Ventilator 210 verbunden.

Durch die Erfindung wird ein modulares System verfügbar gemacht, das einzelne Aggregate/Module enthält, die z.B. für die Erzeugung von Strom, Druckluft, klimatisierter Luft bestimmt sind, wobei die Aggregate/Module aufgrund einheitlicher Anschlußelemente austauschbar sind. Der Anbau oder Ausbau von Modulen erfordert keine fachkundigen Monteure, weil V-Profil-Spannbänder und einheitliche Wulstabmessungen an den Modulgehäusen vorgesehen sind.

Größere Reparaturen vor Ort entfallen ebenso, weil nur noch Antriebs-/Abtriebsaggregate ausgetauscht werden müssen.

Die in den oben beschriebenen Aggregaten verwendeten elektrischen Maschinen bzw. Generatoren sind vollkommen selbstregelnd/autark und enthalten alles, was an Schutzund Regeleinheiten notwendig ist. Das Kontroll- und Bedienfeld für die Maschinen ist so ausgebildet, daß es auch mittels eines Kabelbaums/Verlängerungskabels mit Endsteckern zur Fernbedienung benutzt werden kann. Griffe am oberen Ende der Gehäuse, welche die Einheiten umgeben und vollständig mit der generatoreigenen Luftkühlung durchflutet werden, erleichtern das Halten während des Montierens der V-Schelle und das Tragen.

Ähnlich wie das Generatoraggregat sieht auch ein Airstartmodul aus. Die Airstart-Einheit ist vollkommen gekapselt, verfügt über nur zwei Lagerstellen für den schnelllaufenden Teil. Außer dem Planetengetriebe gibt es keine weiteren Wellen oder Zahnräder. Die Ölpumpe ist auf der Antriebswelle integriert, ebenso das Kühlgebläse. Ölfilter, Ölvorrat, Ölkühler, Öldruckregelung sind im Gehäuse integriert. Die Ritzelwelle des Sonnenrades trägt gleichzeitig den Verdichterrotor 1- oder mehrstufig. Sitzt ein Turbinenrad ebenfalls auf der hierfür verlängerten gemeinsamen Welle, kann das Modul als Klimaanlage arbeiten wie bereits erwähnt.

Geräte bzw. Aggregate der oben beschriebenen Art können in Kraftfahrzeugen eingesetzt werden, weil das jeweilige Aggregat unabhängig vom Hauptantrieb des Fahrzeuges arbeiten und außerdem bei Pannen nützliche Dienste leisten kann. Hierbei kann elektrische und pneumatische Energie erzeugt werden.

Die oben beschriebenen Turbinen sind so konstruiert, daß diverse Teile aus Keramikwerkstoffen und andere Teile aus Kohlefasermaterialien hergestellt sind.

Die Startergeneratoren haben ein sehr hohes Anzugs-/Drehmoment, welches sich schon aus dem großen Durchmesser des Rotors ergibt, damit die Turbine in kürzester Zeit von Null auf Betriebsdrehzahl gebracht werden kann. Dies ist sehr wichtig im Fahrzeugbau und dort wo die Drehmomentkennlinie des Anbaumoduls dies erfordert. Der Lüfter kann nicht nur zur Kühlung des Ölkreislaufs herangezogen werden.

Selbstverständlich ist die erfindungsgemäße Lehre nicht an eine bestimmte interne technische Ausführungsform einer Gasturbine gebunden. Gegenstand sind Pumpe, Generator, stufenloses Getriebe etc.. Diese sind in zwei Punkten identisch, indem sie erstens auf die Charakteristik eines bestimmten Antriebsmoduls ausgerichtet sind, nämlich auf Flanschbild, Schnellverbindung, An-/Abtriebswelle, Drehzahl etc. und zweitens die Elemente autark sind. Das Antriebsmodul besteht aus drei möglichen Varianten mit ebenfalls drei identischen Flanschbildern etc.. Für Gruppen wie THW ist eine Kleingasturbine vorgesehen, für einen ortsgebundenen Einsatz ein Diesel-/Benzinmotor, für den mehr stationären Einsatz ein Elektromotor. Das ganze nennt sich zum Beispiel Airport-Back-Up-System oder universales Energieträgersystem.

Auch ist darauf hinzuweisen, daß Leitschaufelplatte, einstückiger Rotor etc. nicht zwingend sind. Wichtig ist vielmehr, daß keine unnötigen Zahnräder, Lagerstellen oder sonstige mechanische Bauteile integriert sein müssen. Daher ist es nach der erfindungsgemäßen Lehre möglich, u.a. alle Gehäuseteile aus Dreh- und Frästeilen herzustellen, da die Bauweise auf einer konzentrischen bzw. koaxialen Konstruktion des gesamten Aggregates basiert. Durch die erwähnte Bauweise ergeben sich weitere Vorteile wie einfache und preiswerte Herstellung der Gehäuse aus zum Beispiel Kohlefasermaterialien (Wickelverfahren), geringe Modellkosten, sehr gute aerodynamische Werte, zylindrischer Körper ohne abstehende Anbau- bzw. Hilfsaggregate.

## Patentansprüche

1. Gasturbineneinheit zum Konditionieren von Luft, umfassend
- eine erste über zwei Lager abgestützte Welle (14, 116, 154),
- aus einem Laufrad eines ersten Verdichters und einem Laufrad (12) einer ersten Turbine bestehende Einheit,
- eine weitere zweite Turbine (132, 160, 170), die auf der ersten oder einer zweiten Welle gelagert ist,
**dadurch gekennzeichnet,**
- **dass** radial zu dem Laufrad (10) des ersten Verdichters und dem Laufrad (12) der ersten Turbine eine gemeinsame Platte (54) angeordnet ist, wobei von einer Seite der Platte Diffusorschaufeln (52) des Verdichters und von der anderen Seite Turbinenschaufeln (56) ausgehen,
- **dass** der zweiten Turbine über den ersten Verdichter oder einen zweiten Verdichter (130) komprimierte Luft zugeführt wird,
- **dass** ein Wärmetauscher (134, 162) vorgesehen ist, über den die komprimierte Luft zur zweiten Turbine strömt und
- **dass** auf der ersten Welle zwischen den Lagern ein Rotor eines Generators (156, 158) angeordnet ist, wobei bei auf der zweiten Welle angeordneter zweiten Turbine die zweite Welle über einen von dem Generator gespeisten Elektromotor (126) angetrieben ist.

2. Gasturbineneinheit nach Anspruch 1,
**dadurch gekennzeichnet,**
**daß** der weiteren Turbine (170) Zapfluft der Verdichter-Turbinen-Anordnung (152) zuführbar ist.

3. Gasturbineneinheit nach Anspruch 1 oder 2,
**dadurch gekennzeichnet,**
**daß** in der Platte (54) Öffnungen vorgesehen sind, die in Kühlkanälen bzw. Hohlräumen (60) in den Turbinenleitschaufeln (56) münden, in denen bereits Öffnungen (62) für das Austreten von Kühlluft vorgesehen sind.

4. Gasturbineneinheit nach Anspruch 1 oder 2,
**dadurch gekennzeichnet,**
**daß** die Platte (54) zwischen den Diffusorleitschaufeln (52) und den Turbinenleitschaufeln (56) einstückig mit den Diffusor- und Turbinenleitschaufeln (52, 56) ausgebildet ist und daß die Turbinenleitschaufeln und die Verdichterleitschaufeln in einem einstückigen Rotor angeordnet sind.

5. Gasturbineneinheit nach einem oder mehreren der vorhergehenden Ansprüche,
**dadurch gekennzeichnet,**
**daß** der Turbinenrotor von einem doppelwandigen Gehäuse (64, 102) umgeben ist, in dessen Zwischenräume Kühlgas aus den Turbinenleitschaufeln (56) geleitet wird.

6. Gasturbineneinheit nach einem oder mehreren der vorhergehenden Ansprüche,
**dadurch gekennzeichnet,**
**daß** in der äußeren Wand (102) des doppelwandigen Gehäuses düsenförmige Luftaustrittsöffnungen (104) vorgesehen sind.

7. Gasturbineneinheit nach einem oder mehreren der vorhergehenden Ansprüche,
**dadurch gekennzeichnet,**
**daß** über den in der Gehäusewand (102) angeordneten Luftaustrittsöffnungen (104) Strömungsumlenkplatten (106) angeordnet sind.

8. Gasturbineneinheit nach einem oder mehreren der vorhergehenden Ansprüche,
**dadurch gekennzeichnet,**
**daß** axiale Kanäle für Kühlluft in der Platte (54) und axiale Öffnungen in den Diffusorschaufeln (52) auf einem gleichen Teilkreis angeordnet sind.

9. Gasturbineneinheit nach einem oder mehreren der vorhergehenden Ansprüche,
**dadurch gekennzeichnet,**
**daß** das Verdichtergehäuse, die Platte (54) und die Diffusorschaufeln (52) sowie die Turbinenleitschaufeln (56) miteinander verspannt sind.

10. Gasturbineneinheit nach einem oder mehreren der vorhergehenden Ansprüche,
**dadurch gekennzeichnet,**
**daß** der einstückige Rotor mit den Verdichter- und Turbinenleitschaufeln (16, 68) fliegend gelagert ist.

11. Gasturbineneinheit nach einem oder mehreren der vorhergehenden Ansprüche,
**dadurch gekennzeichnet,**
**daß** im einstückigen Rotor Kühlkanäle zwischen der Verdichterseite und den Turbinenleitschaufeln (68) vorgesehen sind.

12. Gasturbineneinheit nach einem oder mehreren der vohergehenden Ansprüche,
**dadurch gekennzeichnet,**
**daß** zwischen der Platte (54) und den zwischen den Verdichterleitschaufeln (54) und den Turbinenleitschaufeln (68) liegenden Rand des einstückigen Rotors eine Labyrinthdichtung vorgesehen ist.

13. Gasturbineneinheit nach einem oder mehreren der vorhergehenden Ansprüche,
**dadurch gekennzeichnet,**
**daß** an dem die Gasturbine umgebenden Gehäuse (22) ein Wulst (108) für die Befestigung an einer stirnseitigen Platte (20), die die Platte (54) mit den Diffusor- und Turbinenleitschaufeln (56) und das doppelwandige Gehäuse (64, 102) trägt, mittels eines V-Profil-Spannbandes vorgesehen ist.

14. Gasturbineneinheit nach einem oder mehreren der vorhergehenden Ansprüche,
**dadurch gekennzeichnet,**
**daß** die Welle (14) der Gasturbine mit einem Untersetzungsgetriebe verbunden ist.

15. Gasturbineneinheit nach Anspruch 14,
**dadurch gekennzeichnet,**
**daß** das Untersetzungsgetriebe ein Planetengetriebe ist.

16. Gasturbineneinheit nach einem oder mehreren der vorhergehenden Ansprüche,
**dadurch gekennzeichnet,**
**daß** die Gasturbine und/oder das Untersetzungsgetriebe ausschließlich auf zwei Lagerstellen gelagert sind.

17. Gasturbineneinheit nach einem oder mehreren der vorhergehenden Ansprüche,
**dadurch gekennzeichnet,**
**daß** die Lagerstellen mit Fettkammern versehen sind.

18. Gasturbineneinheit nach einem oder mehreren der vorhergehenden Ansprüche,
**dadurch gekennzeichnet,**
**daß** auf der Abtriebswelle (34) ein Pumpenrad einer Ölpumpe (38) und/oder ein Pumpenrad einer Kraftstoffpumpe (42) und/oder ein Rotor (44) eines Startergenerators angeordnet sind.

19. Gasturbineneinheit nach einem oder mehreren der vorhergehenden Ansprüche,
**dadurch gekennzeichnet,**
**daß** auf der Abtriebswelle (34) ein Lüfterrad (46) eines Ventilators angeordnet ist.

20. Gasturbineneinheit nach Anspruch 18,
**dadurch gekennzeichnet,**
**daß** der Startergenerator ein Gleich-, Wechsel- oder Drehstrommotor ist.

21. Gasturbineneinheit nach einem oder mehreren der vorhergehenden Ansprüche,
**dadurch gekennzeichnet,**
**daß** das Lüfterrad (46) einen Luftstrom über Kühlrippen des Gehäuses leitet.

22. Gasturbineneinheit nach einem oder mehreren der vorhergehenden Ansprüche,
**dadurch gekennzeichnet,**
**daß** auf der Anschlußseite der Gasturbineneinheit für anzutreibende Maschinen ein Bund (112) für ein V-Profil-Spannband vorgesehen ist, mit dem die Verbindung zum Gehäuse der anzutreibenden Maschine bestellbar ist.

23. Gasturbineneinheit nach einem oder mehreren der vorhergehenden Ansprüche,
**gekennzeichnet durch**
die Verbindung mit einem Elektromotor, Elektrogenerator und/oder einer elektrischen Motor-Generator-Einheit.

24. Gasturbineneinheit nach Anspruch 23,
**dadurch gekennzeichnet,**
**daß** die elektrische Motor/Generatoreinheit eine integrierte Kühlung und/oder eine integrierte Spannungsregelung und/oder einen integrierten Überlastschutz und/oder integrierte Lastschaltkontakte und/oder eine integrierte Instrumentierung und/oder integrierten Unter-/Überspannungsschutz aufweist.

25. Gasturbineneinheit nach einem oder mehreren der vorhergehenden Ansprüche,
**gekennzeichnet durch**
die Verwendung zum Antrieb eines Verteilergetriebes mit wenigstens zwei Abtriebswellen (146, 148) eines stufenlosen Getriebes für z.B. Fahrzeuge.

26. Gasturbineneinheit nach einem oder mehreren der Ansprüche 1 bis 24,
**gekennzeichnet durch**
die Verwendung zum Antrieb von hydraulischen Systemen und von Stromversorgungsgeräten.

27. Gasturbineneinheit nach einem oder mehreren der Ansprüche 1 bis 24,
**dadurch gekennzeichnet,**
**daß** auf der gleichen Welle wie die Turbine ein Turbokompressor (158) angeordnet ist.

28. Gasturbineneinheit nach einem oder mehreren der Ansprüche 1 bis 24,
**gekennzeichnet durch**
die Verwendung zum Antrieb eines Hochdruckkompressors.

29. Gasturbineneinheit nach einem oder mehreren der Ansprüche 1 bis 24,
**gekennzeichnet durch**
die Verwendung zum Antrieb einer Pumpe.

30. Gasturbineneinheit nach einem oder mehreren der vorhergehenden Ansprüche,
**gekennzeichnet durch**
die Verwendung zum Antrieb einer Wasserstrahlpumpe.

31. Gasturbineneinheit nach einem oder mehreren der vorhergehenden Ansprüche,
**dadurch gekennzeichnet,**
**daß** wenigstens ein Teil der Abgase über einen Wärmetauscher geleitet werden.

32. Gasturbineneinheit nach einem oder mehreren der Ansprüche 1 bis 24,
**gekennzeichnet durch**
die Verwendung zum Antrieb eines Propellers, eines Flugzeuges oder Hubschraubers.

## Claims

1. Gas turbine unit for air conditioning, comprising
- a first shaft (14, 116, 154) supported via two bearings,
- a unit consisting of a rotor disk of a first compressor and a rotor disk (12) of a first turbine,
- a further second turbine (132, 160, 170) arranged on the first or on a second shaft
**characterized in**
- **that** a common plate (54) is arranged radially to the rotor disk (10) of the first compressor and the rotor disk (12) of the first turbine, from one side of the plate extending diffuser vanes (52) of the compressor and from the other side extending turbine buckets (56),
- **that** compressed air is fed to the second turbine via the first compressor or a second compressor (130),
- **that** a heat exchanger (134, 162) is provided, via which the compressed air flows to the second turbine and
- **that** a rotor of a generator (156, 158) is arranged on the first shaft between the bearings, whereby in case of the second shaft being arranged on the second turbine, the second shaft is driven by an electric motor (126) powered by the generator.

2. Gas turbine unit according to Claim 1,
**characterized in**
**that** the further turbine (170) can be fed with dispensing air of the compressor-turbine-arrangement (152).

3. Gas turbine unit according to Claim 1 or 2,
**characterized in**
**that** openings are provided in the plate (54), which enter into cooling channels or hollow spaces (60) in the turbine guide vanes (56), in which openings (62) are already provided for the emerging of cooling air.

4. Gas turbine unit according to Claim 1 or 2,
**characterized in**
**that** the plate (54) is designed between the diffuser guide vanes (52) and the turbine guide vanes (56) in one piece with the diffuser and the turbine guide vanes (52, 56) and that the turbine guide vanes and the compressor guide vanes are arranged in a rotor made of one piece.

5. Gas turbine unit according to one or more of the proceeding claims,
**characterized in**
**that** the turbine rotor is surrounded by a double-walled housing (64, 102), into whose spaces cooling gas is led from the turbine guide vanes (56).

6. Gas turbine unit according to one or more of the proceeding claims,
**characterized in**
**that** nozzle-shaped air exit openings (104) are provided in the outer wall (102) of the double-walled housing.

7. Gas turbine unit according to one or more of the proceeding claims,
**characterized in**
**that** flow guide plates (106) are arranged above the air exit openings arranged in the housing wall (102).

8. Gas turbine unit according to one or more of the proceeding claims,
**characterized in**
**that** axial channels for cooling air in the plate (54) and axial openings in the diffuser vanes (52) are arranged on an identical graduated circle.

9. Gas turbine unit according to one or more of the proceeding claims,
**characterized in**
**that** the compressor housing, the plate (54) and the diffuser vanes (52) as well as the turbine guide vanes (56) are braced with each other.

10. Gas turbine unit according to one or more of the proceeding claims,
**characterized in**
**that** the rotor made of one piece with the compressor and turbine guide vanes (16, 68) runs floatingly on bearings.

11. Gas turbine unit according to one or more of the proceeding claims,
**characterized in**
**that** cooling channels between the compressor side and the turbine guide vanes (68) are provided in the rotor made of one piece.

12. Gas turbine unit according to one or more of the proceeding claims,
**characterized in**
**that** a labyrinth box is provided between the plate (54) and the edge of the rotor made of one piece located between the compressor guide vanes (54) and the turbine guide vanes (68).

13. Gas turbine unit according to one or more of the proceeding claims,
**characterized in**
**that** a swelling (108) is provided on the housing (22) surrounding the gas turbine for the attachment by a V-profile tightening strap to a plate (20) on the face, which supports the plate (54) with the diffuser and turbine guide vanes (56) and the double-walled housing (64, 102).

14. Gas turbine unit according to one or more of the proceeding claims,
**characterized in**
**that** the shaft (14) of the gas turbine is connected with a reducing gear.

15. Gas turbine unit according to Claim 14,
**characterized in**
**that** the reducing gear is a planet gear.

16. Gas turbine unit according to one or more of the proceeding claims,
**characterized in**
**that** the gas turbine and/or the reducing gear exclusively run on two bearings.

17. Gas turbine unit according to one or more of the proceeding claims,
**characterized in**
**that** the bearings are provided with grease chambers.

18. Gas turbine unit according to one or more of the proceeding claims,
**characterized in**
**that** a pump wheel of an oil pump (38) and/or a pump wheel of a fuel pump (42) and/or a rotor (44) of a starter generator are arranged on the driven shaft (34).

19. Gas turbine unit according to one or more of the proceeding claims,
**characterized in**
**that** a ventilator wheel (46) of a ventilator is arranged on the driven shaft (34).

20. Gas turbine unit according to Claim 18,
**characterized in**
**that** the starter generator is a DC-, AC- or three-phase AC-motor.

21. Gas turbine unit according to one or more of the proceeding claims,
**characterized in**
**that** the ventilator wheel (46) controls an airflow via cooling ribs of the housing.

22. Gas turbine unit according to one or more of the proceeding claims,
**characterized in**
**that** on the connecting side of the gas turbine unit for machines to be driven a collar (112) for a V-profile tightening strap is provided, with which the connection with the housing of the machine to be driven can be made.

23. Gas turbine unit according to one or more of the proceeding claims,
**characterized by**
the connection with an electric motor, electric generator and/or an electrical motor-generator-unit.

24. Gas turbine unit according to Claim 23,
**characterized in**
**that** the electrical motor-generator-unit has an integrated cooling and/or an integrated constant voltage control and/or an integrated overload protection and/or integrated power switching contacts and/or an integrated instrumentation and/or integrated under-voltage/overvoltage protection.

25. Gas turbine unit according to one or more of the proceeding claims,
**characterized by**
the use for the actuation of a power divider having at least two driven shafts (146, 148) of an infinitely variable change-speed gear for e.g. vehicles.

26. Gas turbine unit according to one or more of claims 1 to 24,
**characterized by**
the use for the actuation of hydraulic systems and power supply devices.

27. Gas turbine unit according to one or more of claims 1 to 24,
**characterized in**
**that** a turbocompressor (158) is arranged on the same shaft as the turbine.

28. Gas turbine unit according to one or more of claims 1 to 24,
**characterized by**
the use for the actuation of a high-pressure compressor.

29. Gas turbine unit according to one or more of claims 1 to 24,
**characterized by**
the use for the actuation of a pump.

30. Gas turbine unit according to one or more of the proceeding claims,
**characterized by**
the use for the actuation of a water jet blast.

31. Gas turbine unit according to one or more of the proceeding claims,
**characterized in**
**that** at least a part of the exhaust gas is guided by a heat exchanger.

32. Gas turbine unit according to one or more of claims 1 to 24,
**characterized by**
the use for the actuation of a propeller, an airplane or a helicopter.

## Revendications

1. Unité de turbine à gaz pour conditionner de l'air comprenant :
- un premier arbre (14, 116, 154) appuyé dans deux paliers,
- une unité formée d'un rotor d'un premier compresseur et d'un rotor (12) d'une première turbine,
- une autre seconde turbine (132, 160, 170) montée sur le premier ou le second arbre,
**caractérisée en ce que**
- une plaque (54) commune est prévue radialement par rapport au rotor (10) du premier compresseur et au rotor (12) de la première turbine, un côté de la plaque portant des aubes de diffuseur (52) du compresseur et l'autre côté des aubes de turbine (56),
- la seconde turbine reçoit de l'air comprimé par le premier compresseur ou par un second compresseur (130),
- un échangeur de chaleur (134, 162) est prévu par lequel de l'air comprimé arrive à la seconde turbine, et
- le premier arbre comporte entre les paliers, un rotor d'un générateur (156, 158), et pour la seconde turbine prévue sur le second arbre, le second arbre est entraîné par un moteur électrique (126) alimenté par le générateur.

2. Unité de turbine à gaz selon la revendication 1,
**caractérisée en ce que**
l'autre turbine (170) reçoit de l'air de prise du dispositif compresseur-turbine (152).

3. Unité de turbine à gaz selon la revendication 1 ou 2,
**caractérisée en ce que**
des ouvertures sont prévues dans la plaque (54) débouchant dans des canaux de refroidissement ou des cavités (60) dans les aubes directrices (56) de la turbine, dans lesquels il y a déjà des ouvertures (62) pour la sortie de l'air de refroidissement.

4. Unité de turbine à gaz selon la revendication 1 ou 2,
**caractérisée en ce que**
la plaque (54) entre les aubes directrices de diffuseur (52) et les aubes directrices de turbine (56) fait corps avec les aubes directrices de diffuseur et de turbine (52, 56) et
les aubes directrices de turbine et les aubes directrices de compresseur sont prévues dans un rotor en une seule pièce.

5. Unité de turbine à gaz selon une ou plusieurs des revendications précédentes,
**caractérisée en ce que**
le rotor de turbine est entouré par un boîtier (64, 102) à double paroi dont les espaces intermédiaires guident le gaz de refroidissement des aubes directrices de turbine (56).

6. Unité de turbine à gaz selon une ou plusieurs des revendications précédentes,
**caractérisée en ce que**
des orifices de sortie d'air (104) en forme de buse sont prévus dans la paroi extérieure (102) du boîtier à double paroi.

7. Unité de turbine à gaz selon une ou plusieurs des revendications précédentes,
**caractérisée en ce que**
des plaques de déviation d'écoulement (106) sont prévues dans les orifices de sortie d'air (104) de la paroi de boîtier (102).

8. Unité de turbine à gaz selon une ou plusieurs des revendications précédentes,
**caractérisée par**
des canaux axiaux pour l'air de refroidissement dans la plaque (54) et des orifices axiaux dans les aubes de diffuseur (52) prévus sur un même cercle primitif.

9. Unité de turbine à gaz selon une ou plusieurs des revendications précédentes,
**caractérisée en ce que**
le boîtier de compresseur, la plaque (54) et les aubes de diffuseur (52) ainsi que les aubes directrices de turbine (56) sont fixés les uns aux autres.

10. Unité de turbine à gaz selon une ou plusieurs des revendications précédentes,
**caractérisée en ce que**
le rotor en une seule pièce est monté flottant avec les aubes directrices de compresseur et de turbine (16, 68).

11. Unité de turbine à gaz selon une ou plusieurs des revendications précédentes,
**caractérisée par**
des canaux de refroidissement prévus dans le rotor en une seule pièce entre le côté compresseur et les aubes directrices de turbine (68).

12. Unité de turbine à gaz selon une ou plusieurs des revendications précédentes,
**caractérisée par**
un joint en labyrinthe entre la plaque (54) et le bord du rotor en une seule pièce prévu entre les aubes directrices de compresseur (54) et les aubes directrices de turbine (68).

13. Unité de turbine à gaz selon une ou plusieurs des revendications précédentes,
**caractérisée en ce que**
le boîtier (22) entourant la turbine à gaz comporte un bourrelet (108) pour la fixation à une plaque frontale (20) portant la plaque (54) avec les aubes directrices de diffuseur et de turbine (56) et le boîtier à double paroi (64, 102), par l'intermédiaire d'une bande de serrage à profil en V.

14. Unité de turbine à gaz selon une ou plusieurs des revendications précédentes,
**caractérisée en ce que**
l'arbre (14) de la turbine à gaz est relié à un réducteur.

15. Unité de turbine à gaz selon la revendication 14,
**caractérisée en ce que**
le réducteur est une transmission planétaire.

16. Unité de turbine à gaz selon une ou plusieurs des revendications précédentes,
**caractérisée en ce que**
la turbine à gaz et/ou le réducteur sont montés exclusivement sur deux paliers.

17. Unité de turbine à gaz selon une ou plusieurs des revendications précédentes,
**caractérisée en ce que**
les paliers sont munis de chambre à graisse.

18. Unité de turbine à gaz selon une ou plusieurs des revendications précédentes,
**caractérisée en ce que**
l'arbre de sortie (34) porte un rotor d'une pompe à huile (38) et/ou un rotor d'une pompe à carburant (42) et/ou rotor (44) d'un démarreur-générateur.

19. Unité de turbine à gaz selon une ou plusieurs des revendications précédentes,
**caractérisée par**
un rotor de ventilateur (46) installé sur l'arbre de sortie (34).

20. Unité de turbine à gaz selon la revendication 18,
**caractérisé en ce que**
le démarreur-générateur est un moteur à courant continu, à courant alternatif ou à courant triphasé.

21. Unité de turbine à gaz selon une ou plusieurs des revendications précédentes,
**caractérisée en ce que**
le rotor de ventilateur (46) conduit une vaine d'air sur des nervures de refroidissement du boîtier.

22. Unité de turbine à gaz selon une ou plusieurs des revendications précédentes,
**caractérisée en ce que**
le côté de branchement de l'unité de turbine à gaz comporte une collerette (112), pour des machines à entraîner pour une bande de serrage à profil en V réalisant la liaison avec le boîtier de la machine à entraîner.

23. Unité de turbine à gaz selon une ou plusieurs des revendications précédentes,
**caractérisée par**
la liaison à un moteur électrique, une génératrice électrique et/ou un ensemble moteur-générateur.

24. Unité de turbine à gaz selon la revendication 23,
**caractérisée en ce que**
l'ensemble moteur-générateur électrique comporte un refroidissement intégré et/ou une régulation de tension intégrée et/ou une protection de surcharge intégrée et/ou des contacts de commutation de charge intégrés et/ou une instrumentation intégrée et/ou une protection de sur/sous-tension intégrée.

25. Unité de turbine à gaz selon une ou plusieurs des revendications précédentes,
**caractérisée par**
son application à l'entraînement d'une transmission distributrice ayant au moins deux arbres de sortie (146, 148) par exemple d'une transmission à variation continue par exemple pour les véhicules automobiles.

26. Unité de turbine à gaz selon une ou plusieurs des revendications 1 à 24,
**caractérisée par**
son application à l'entrainement de systèmes hydrauliques et d'appareils d'alimentation courants.

27. Unité de turbine à gaz selon une ou plusieurs des revendications 1 à 24,
**caractérisée en ce qu'**
elle est montée sur le même arbre que la turbine d'un turbo compresseur (158).

28. Unité de turbine à gaz selon une ou plusieurs des revendications 1 à 24,
**caractérisée par**
son application à l'entraînement d'un compresseur à haute pression.

29. Unité de turbine à gaz selon une ou plusieurs des revendications 1 à 24,
**caractérisée par**
son application à l'entraînement d'une pompe.

30. Unité de turbine à gaz selon une ou plusieurs des revendications précédentes,
**caractérisée par**
son application à l'entraînement d'une pompe à jet d'eau.

31. Unité de turbine à gaz selon une ou plusieurs des revendications précédentes,
**caractérisée en ce qu'**
au moins une partie des gaz d'échappement passe par un échangeur de chaleur.

32. Unité de turbine à gaz selon une ou plusieurs des revendications 1 à 24,
**caractérisée par**
l'application à l'entraînement d'une hélice, d'un avion ou d'un hélicoptère.
